# FASCICULE DE BREVET EUROPEEN

(11) **EP 3 976 950 B1**
(45) Date de publication et mention de la délivrance du brevet: **08.05.2024**
(21) Numéro de dépôt: 20737255.8
(22) Date de dépôt: 20.05.2020
(51) Int. Cl.: F02C 9/26, F02C 9/30, F02C 9/46

(54) **SYSTEME D'ALIMENTATION EN CARBURANT D'UNE TURBOMACHINE AVEC REGULATION DU DEBIT DE CARBURANT**
KRAFTSTOFFVERSORGUNGSSYSTEM EINER TURBOMASCHINE MIT REGELUNG DES KRAFTSTOFFFLUSSES
FUEL SUPPLY SYSTEM OF A TURBOMACHINE, WITH REGULATION OF THE FUEL FLOW

(30) Priorité: 24.05.2019 FR 1905514
(43) Date de publication de la demande: 06.04.2022
(73) Titulaire: SAFRAN AIRCRAFT ENGINES, 75015 Paris (FR)
(72) Inventeur: PORA, Loïc, 77550 MOISSY-CRAMAYEL (FR); DE WERGIFOSSE, Huguette, 77550 MOISSY-CRAMAYEL (FR)
(74) Mandataire: Gevers & Orès
(86) Numéro de dépôt international: PCT/FR2020/050838
(87) Numéro de publication internationale: WO 2020/240117

(56) Documents cités:
- EP-A1- 0 694 120
- WO-A1-2018/138454

## Description

### Domaine technique de l'invention

La présente invention concerne un système d'alimentation en carburant d'une turbomachine avec régulation du débit de carburant lors d'une panne de l'entraînement d'une pompe d'alimentation en carburant de la turbomachine fonctionnant alors en survitesse, afin d'assurer un débit de carburant au juste besoin.

### Arrière-plan technique

L'état de la technique comprend notamment le document EP 0 694 120 A1.

En prenant le cas non limitatif des turbomachines d'aéronefs, notamment les turboréacteurs d'avions, ces turbomachines sont équipées de systèmes de régulation de carburant. Ces systèmes comportent une pompe principale haute pression du type volumétrique délivrant le carburant à la chambre de combustion.

En alternative, il est possible aussi d'utiliser une pompe centrifuge. Ce qui va maintenant être décrit se rapporte cependant à une pompe volumétrique.

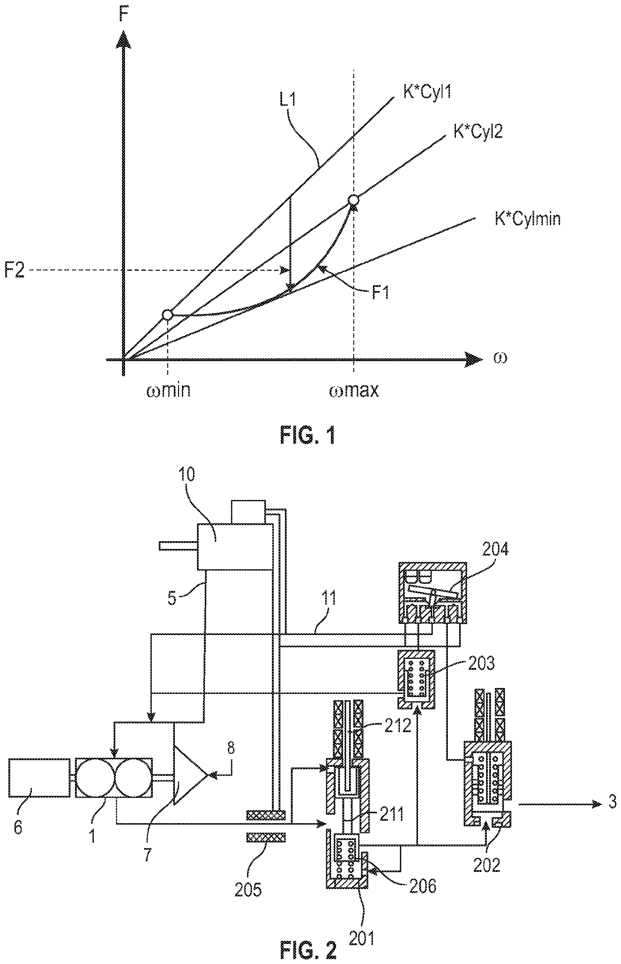

En se référant à la figure 1 représentant les variations de débit F en fonction de la vitesse de rotation ω de l'axe moteur de la turbomachine, le besoin F1 en carburant varie de façon non linéaire en fonction du régime de la turbomachine.

La vitesse de rotation ω de l'axe moteur de la turbomachine varie entre une valeur minimale ωmin, pour l'allumage de la turbomachine, et une valeur maximale ωmax pour le décollage. Le régime correspondant à un vol de croisière se situe entre ces deux extrêmes.

Suivant l'application, le point crucial est situé soit à l'allumage basse vitesse soit au décollage, à haute vitesse. Sur la figure 1, ce point crucial se situe au niveau de l'allumage.

Il faut alors choisir la cylindrée de la pompe de telle manière que sa caractéristique linéaire soit égale à la valeur K.Cyl1, pour assurer un débit suffisant lors de toutes les conditions de vol.

La référence K est le rapport entre la vitesse de la pompe et la vitesse de l'axe du turboréacteur et ce rapport est multiplié aux valeurs de la cylindrée de la pompe à cette figure 1.

Cette valeur K.Cyl1 peut être significativement supérieure à la valeur minimale K.Cylmin nécessaire dans certaines conditions de vol, voire à celle K.Cyl2 nécessaire lors du décollage.

Suivant ce dimensionnement, le débit fourni par la pompe suit donc la droite L1 sur le diagramme débit/vitesse de rotation de la figure 1. Pendant une large phase de vitesse d'entraînement, notamment en vol de croisière, la pompe délivre donc un débit supérieur au besoin en débit carburant, donc un surplus F2 de carburant.

Le groupe hydromécanique doit donc renvoyer vers la pompe, par une boucle de recirculation, le surplus de carburant F2 par rapport au besoin.

Ce mode de fonctionnement induit un surplus de prélèvement de puissance sur le boîtier d'engrenage du turboréacteur, surplus de puissance mécanique qui se transforme en puissance thermique dissipée dans la boucle de recirculation.

La boucle de recirculation, source de réjection thermique, a un impact sur la surface de l'échangeur carburant/huile de lubrification et doit donc être fortement réduite.

Il a été proposé, notamment par le document WO2018/138454, de supprimer cette boucle de recirculation en pilotant la vitesse de la pompe de manière à s'adapter au juste besoin en termes de débit et de pression. Cette régulation en vitesse est généralement réalisée par l'apport de machines électriques. En se référant à la figure 2, ce document divulgue un système d'alimentation en carburant d'une turbomachine, comprenant un circuit de carburant comportant un moyen de pressurisation 202 positionnée dans une conduite d'alimentation en carburant juste en amont de la sortie 3 dudit circuit muni d'un clapet d'arrêt.

Une pompe 1 est agencée pour envoyer dans le circuit un débit de carburant qui est une fonction croissante de la vitesse de rotation d'un arbre de la pompe 1. Le système délivre cette quantité de carburant en sortie 3 pour une turbomachine.

La pompe 1 peut être entraînée, directement ou indirectement, par un moteur 6 mais aussi, en alternative, par deux moteurs dont le couple et la vitesse de chacun sont alors pilotés par la puissance électrique et la fréquence du courant envoyé par un convertisseur dédié à chacun des moteurs, chacun des convertisseurs étant commandé par un boîtier de commande.

Le circuit comporte un capteur de débit 201 placé dans un conduit d'alimentation en carburant entre une sortie de la pompe 1 et le moyen de pressurisation 202.

Le capteur de débit 201 comprend un tiroir coulissant 211, un moyen de rappel 206 et un capteur 212 de position dudit tiroir, ce capteur de position étant avantageusement un capteur électrique passif inductif de déplacements linéaires, connu sous l'acronyme anglo-saxon de LVDT signifiant « *Linear Variable Differential Transformer ».*

La position du tiroir 211 est pilotée par une différence de pression aux bornes du capteur de débit 201 conformée pour compenser l'effort appliqué par le moyen de rappel 206 sur ledit tiroir 211, le circuit étant agencé pour que la position dudit tiroir 211 indique un débit de carburant injecté passant par le capteur de débit 201 .

Il est prévu un moyen d'alimentation 7 en carburant de la pompe 1, avantageusement une deuxième pompe qui est une pompe basse pression, à partir d'un réservoir de carburant 8. On définit un groupe hydromécanique comme comprenant le capteur de débit 201 avec ses éléments dédiés 206, 211, 212, le moyen de pressurisation 202 avec son clapet d'arrêt, une servovalve 204 de commande et un clapet de recirculation 203.Le système d'alimentation en carburant est également connecté à des actionneurs de géométries variables 10. Pour ce faire, le circuit de carburant comprend avantageusement un piquage sur le conduit de sortie de la pompe 1 pour alimenter une boucle de commande des actionneurs des géométries variables 10 et intégrant un système de filtration 205 par lequel transite l'alimentation des géométries variables 10 ainsi que tous les circuits de commande. Le piquage est placé entre la pompe 1 et le capteur de débit 201 du groupe hydromécanique. Une boucle de recirculation de carburant 5 retourne du carburant utilisé des géométries variables 10 vers la pompe 1 ainsi que les débits de refroidissement de ces géométries variables.

La servovalve 204 commande le moyen de pressurisation 202 et le clapet de recirculation 203. Le moyen de pressurisation 202 reste nécessaire pour assurer la pression minimale pour le bon fonctionnement des géométries variables 10, ainsi que pour assurer la coupure du débit injecté.

Lors de l'activation de cette coupure, par la servovalve 204 commandant le clapet de recirculation 203, l'échappement du débit délivré par la pompe 1, avantageusement volumétrique, doit être assuré, afin de ne pas monter en pression dans le circuit.

Ainsi, le clapet de recirculation 203 est rajouté pour assurer cette recirculation, le temps de la diminution de la vitesse de rotation de la pompe. Cette recirculation n'existera que lors de la phase d'arrêt ou lors de la préparation à l'allumage.

A l'allumage, la pompe sera entraînée à une vitesse de rotation minimale. Une partie du débit traversera le capteur de débit 201 et sera recirculée par le clapet de recirculation 203.

La vitesse de rotation de la pompe 1 sera ensuite adaptée pour atteindre la bonne consigne de débit d'allumage. La servovalve 204 sera alors activée, ce qui entraînera l'ouverture du clapet d'arrêt associé au moyen de pressurisation 202, la fermeture du clapet de recirculation 203 et donc permettra l'injection du débit d'allumage.

Enfin, le clapet de recirculation 203 assurera la protection en cas de survitesse liée à une défaillance du contrôle de la vitesse de la pompe.

En cas d'appel de débit lié aux géométries variables 10, à une vitesse de rotation donnée, le capteur de débit 201 tendra à se refermer, obligeant l'ensemble d'entraînement à accélérer afin de maintenir le bon débit injecté demandé.

La boucle de contrôle, basée sur la position du capteur de débit, permet donc une vitesse de pompe adaptée pour tout point de fonctionnement, que les géométries variables soient actives ou non.

Dans un tel système, la vitesse de rotation de la pompe est adaptée au besoin et il n'est plus nécessaire de mettre en place une boucle de recirculation du carburant, d'où la possibilité de supprimer une soupape régulatrice prévue dans un ancien état de la technique.

Il est donc possible, par exemple, d'imaginer une solution où un moteur électrique entraîne directement la pompe à la vitesse souhaitée. Dans un tel cas de figure, ce qui peut être aussi le cas pour d'autres formes d'entraînement de la pompe, il existe une possibilité de panne de la commande du moteur entraînant une application de la vitesse maximale sur la pompe. Dans ce cas, sans système particulier, le débit injecté serait trop élevé et entraînerait une survitesse.

Comme énoncé précédemment, le débit est l'image de la vitesse de rotation. En cas de panne de commande du moteur de la pompe amenant à une rotation trop élevée, voire maximale, de l'arbre de la pompe, il devient impossible de piloter le débit dosé et celui-ci devra donc être coupé.

Vis-à-vis du taux de panne de la commande, il serait souhaitable de mettre en place un dispositif permettant d'assurer un fonctionnement correct en cas de dysfonctionnement de l'entraînement de la pompe.

Par conséquent, le problème à la base de l'invention est, dans un système d'alimentation en carburant d'une turbomachine, comprenant une pompe agencée pour envoyer dans le système un débit de carburant par rotation de son arbre à une vitesse pilotée, de doser avec précision la quantité de carburant en sortie du système même lors d'un dysfonctionnement pour lequel l'arbre de la pompe tourne à une vitesse trop rapide et non souhaitée.

### Résumé de l'invention

A cet effet la présente invention concerne un système d'alimentation en carburant d'une turbomachine, comprenant un circuit de carburant comportant un moyen de pressurisation en sortie dudit circuit, une pompe agencée pour envoyer dans ledit circuit un débit de carburant qui est une fonction croissante de la vitesse de rotation d'un arbre de la pompe, le circuit comportant un capteur de débit placé dans un conduit d'alimentation en carburant entre une sortie de la pompe et le moyen de pressurisation, le capteur de débit comprenant un tiroir coulissant, un moyen de rappel et un capteur de position dudit tiroir, la position dudit tiroir étant pilotée par une différence de pression aux bornes du capteur de débit conformée pour compenser l'effort appliqué par le moyen de rappel sur ledit tiroir, le circuit étant agencé pour que la position dudit tiroir indique un débit de carburant injecté passant par le capteur de débit, caractérisé en ce que le circuit de carburant comprend un dispositif de régulation d'une section de passage entre la pompe et le capteur de débit et activé par des moyens de pilotage, l'arbre de la pompe étant associé à des moyens de détection relevant une vitesse de rotation de l'arbre et, si ces moyens de détection relèvent une vitesse de rotation supérieure à un seuil prédéterminé variable, le dispositif de régulation est configuré pour être activé pour réduire et doser le débit de carburant injecté envoyé au capteur de débit. Sans que cela soit limitatif, le dispositif de régulation d'une section de passage entre la pompe et le capteur de débit peut être une servovalve double étage, une servovalve simple étage ou un ensemble tiroir et fourrure. Le seuil prédéterminé variable est un seuil se trouvant au-dessus d'une vitesse de consigne de rotation de l'arbre fonction notamment du débit de carburant à injecter. Ce seuil dépend des conditions de fonctionnement de la turbomachine.

La présente invention a pour but d'éviter le débit d'un surplus de carburant envoyé en sortie du système d'alimentation quand l'arbre de la pompe tourne en survitesse comparée à la vitesse correspondant à un débit de carburant souhaité, donc lors d'un dysfonctionnement de l'entraînement de la pompe conduisant à une survitesse de rotation de l'arbre de la pompe.

Ceci permet de compléter la régulation de débit de carburant par le système d'alimentation au juste besoin comme le proposait l'état de la technique, régulation qui était cependant inopérante lors d'un tel dysfonctionnement entraînant une survitesse de rotation de l'arbre de la pompe.

En fonctionnement normal de rotation de l'arbre de la pompe à une vitesse correspondant à un débit de carburant à injecter souhaité, aucun courant n'est envoyé au dispositif de régulation. Le dispositif de régulation est alors inopérant se sorte qu'il n'y a pas de débit de carburant qui le traverse ou de sorte que le dispositif de régulation ne crée pas une perte de charge dans le conduit d'alimentation par variation de la section de passage.

Dès qu'une survitesse de l'arbre de la pompe est détectée, le dispositif de régulation est activé et peut effectuer une réduction de débit de carburant injecté envoyé au capteur de débit du circuit.

En cas de détection de la panne entraînant une vitesse maximale non souhaitée de rotation de l'arbre de la pompe, le dispositif de régulation est alimenté.

Selon le courant envoyé au dispositif de régulation et le gain du dispositif de régulation, il est ainsi possible de contrôler le débit le traversant qui se soustrait au débit pompé ou d'effectuer une variation de section de passage par le dispositif de régulation.

Ainsi, malgré la vitesse trop élevée de la pompe, il est possible de continuer à doser le débit de carburant injecté avec une précision du même ordre qu'en fonctionnement normal. Le cas de panne avec survitesse de l'arbre de la pompe est donc bien traité, ceci sans dégrader le fonctionnement normal du système.

Avantageusement, le système d'alimentation comprend une unité de contrôle déterminant un débit de consigne à injecter de la pompe vers le capteur de débit et intégrant les moyens de pilotage du dispositif de régulation, le seuil prédéterminé variable étant fonction du débit de consigne, les moyens de pilotage du dispositif de régulation régulant le débit de carburant vers le capteur de débit pour obtenir un débit injecté dans le capteur de débit en fonction du débit de consigne.

Dans une première forme de réalisation de la présente invention, le dispositif de régulation est positionné en dérivation du capteur de débit dans une première dérivation à la conduite d'alimentation en carburant, le dispositif de régulation étant, lors de son activation, alimenté par un débit de carburant soustrait au débit injecté envoyé au capteur de débit.

En fonctionnement normal, la pression en entrée du capteur de débit est adaptée en pilotant la vitesse de la pompe, étant une pompe volumétrique, selon la position du capteur de débit souhaitée. Le dispositif de régulation est piloté en pleine fermeture de manière à ne pas réduire le débit de carburant vers le capteur de débit.

Quand une survitesse non souhaitée de rotation de l'arbre de la pompe est détectée, le dispositif de régulation est ouvert et prélève un débit soustrait sur le débit sortant de la pompe vers le capteur de débit. L'ouverture du dispositif de régulation est avantageusement réglable pour que le débit soustrait soit plus ou moins important en étant quantifiable.

Avantageusement, le carburant du débit soustrait est retourné à la pompe par une première boucle de recirculation reliant le dispositif de régulation à la pompe.

Dans une deuxième forme de réalisation de la présente invention, le dispositif de régulation est positionné en série avec le capteur de débit dans le conduit d'alimentation, le dispositif de régulation créant, lors de son activation, une perte de charge dans le conduit d'alimentation réduisant le débit de carburant injecté envoyé au capteur de débit, la pompe étant une pompe centrifuge haute pression.

Une variation de section de passage via le dispositif de régulation est ainsi créée en amont du capteur de débit, afin d'adapter la perméabilité du circuit à l'aval de la pompe centrifuge. La fermeture du dispositif de régulation rétrécissant la section de passage est avantageusement réglable pour que le débit vers le capteur de débit soit plus ou moins important.

En fonctionnement normal, la pression en entrée du capteur de débit est adaptée en pilotant la vitesse de la pompe centrifuge selon la position du capteur de débit souhaitée. Le dispositif de régulation est piloté en pleine ouverture de manière à minimiser le rétrécissement du passage.

Avantageusement, le circuit de carburant comporte une boucle de commande destinée à actionner des géométries variables de la turbomachine, ladite boucle de commande démarrant par un piquage d'une deuxième dérivation placée en amont de la première dérivation ou du dispositif de régulation sur le conduit d'alimentation en sortie de la pompe, une deuxième boucle de recirculation de carburant retournant vers la pompe à partir des géométries variables.

Lorsque les géométries variables sont actionnées, le capteur de débit et, le cas échéant, le dispositif de régulation, placés après la deuxième dérivation des géométries variables subissent une baisse de débit, ce qui peut obliger les moyens de commande du dispositif d'entraînement à augmenter la vitesse de la pompe pour augmenter le débit afin d'alimenter la chambre d'injection et de maintenir la pression dans le conduit d'alimentation, coopérant pour cela avec le clapet de pressurisation.

Dans ce cas, il est possible que la vitesse de l'arbre de la pompe ne corresponde plus à une survitesse et la soustraction de débit ou un rétrécissement de passage opéré par le dispositif de régulation peut être réduit par diminution de l'ouverture du dispositif de régulation dans la première forme de réalisation de l'invention ou augmentation de l'ouverture du dispositif de régulation dans la deuxième forme de réalisation de l'invention.

Avantageusement, le dispositif de régulation est une servovalve à double étage ou associée à un distributeur.

Avantageusement, si les moyens de détection relèvent une vitesse de rotation inférieure au seuil prédéterminé, le dispositif de régulation n'est pas activé et le débit soustrait est nul ou une réduction de débit envoyé au capteur de débit est nulle.

Avantageusement, un clapet de recirculation est placé en dérivation entre le capteur de débit et le moyen de pressurisation, en étant connecté à une troisième boucle de recirculation, un dispositif de régulation auxiliaire commandant essentiellement le moyen de pressurisation et le clapet de recirculation, les première, deuxième et troisième boucles de recirculation se rejoignant en entrée de la pompe.

L'invention concerne aussi une turbomachine comportant un tel système d'alimentation.

L'invention concerne enfin un procédé de régulation d'un débit injecté de carburant à partir d'une pompe à carburant vers un capteur de débit placé dans un conduit d'alimentation en carburant d'un système d'alimentation en carburant d'une telle turbomachine dans un aéronef, le procédé mettant en oeuvre des lois de pilotage de la vitesse de rotation de l'arbre de la pompe, qui augmentent ou, respectivement, diminuent cette vitesse lorsque le débit indiqué par le capteur de débit diminue ou augmente, de manière à ce que le débit et la pression en sortie du circuit suivent des valeurs de consigne adaptées aux conditions de vol de l'aéronef, caractérisé en ce que, quand il est détecté une vitesse de rotation de l'arbre de la pompe significative d'un dysfonctionnement d'un entraînement de l'arbre en étant trop élevée en regard des valeurs seuils prédéterminées variables de consigne, il est procédé à une réduction du débit de carburant injecté envoyé de la pompe au capteur de débit.

Les procédés divulgués par l'état de la technique le plus proche permettaient de pouvoir de réguler de manière précise et rapide un système d'alimentation avec un circuit de carburant piloté dont la pompe était entraînée au juste besoin.

Il s'est cependant avéré que le taux de panne de l'entraînement avec survitesse de rotation de l'arbre de la pompe pouvait remettre en question l'utilisation de tels procédés selon l'état de la technique.

Il devenait donc nécessaire de mettre en place une solution permettant de lever ce cas de panne bloquant, sans remettre en question l'utilisation du circuit carburant au juste besoin, afin de réduire au maximum la puissance consommée du circuit.

C'est ce que permet justement la présente invention par la mise en oeuvre d'un tel système d'alimentation en carburant et d'un tel procédé de régulation, ceci tout en conservant un traitement de la régulation en fonctionnement normal avec une vitesse de rotation de l'arbre conforme aux lois de pilotage.

Il est ainsi levé un frein majeur à l'utilisation d'un circuit carburant au juste besoin selon l'état de la technique en couvrant un cas de panne handicapant, ceci sans dégradation de la performance de la régulation dans d'autres conditions.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] la figure 1 présente un diagramme en vitesse de rotation et débit montrant l'écart entre le débit fourni par la pompe de carburant et le besoin pour un système d'alimentation en carburant d'une turbomachine dans un aéronef,
[Fig. 2] la figure 2 est une représentation schématique d'un système d'alimentation en carburant d'une turbomachine selon l'état de la technique,
[Fig. 3] la figure 3 est une représentation schématique d'un système d'alimentation en carburant d'une turbomachine conformément à une première forme de réalisation selon la présente invention,
[Fig. 4] la figure 4 est une représentation schématique d'un système d'alimentation en carburant d'une turbomachine conformément à une deuxième forme de réalisation selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

### Description détaillée de l'invention

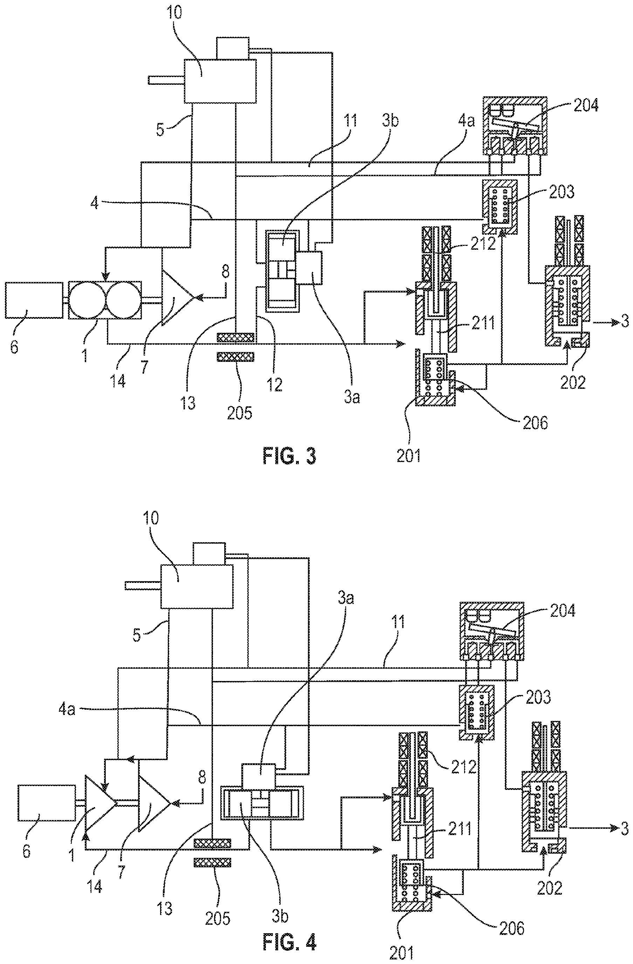

Dans ce qui va suivre, il est fait référence à toutes les figures et notamment aux figures 2 à 4 prises en combinaison. Quand il est fait référence à une ou des figures spécifiques, ces figures sont à prendre en combinaison avec les autres figures pour la reconnaissance des références numériques désignées. En se référant principalement aux figures 3 et 4 qui montrent deux formes de réalisation d'un système d'alimentation en carburant d'une turbomachine mais aussi à ce qui a été énoncé précédemment en regard de la figure 2 relative à un système d'alimentation selon l'état de la technique pour les éléments qui sont communs aux systèmes des figures 2 à 4, la présente invention concerne un système d'alimentation en carburant d'une turbomachine.

Le système comprend un circuit de carburant comportant un moyen de pressurisation 202 en sortie 3 dudit circuit, une pompe 1 agencée pour envoyer dans ledit circuit un débit de carburant qui est une fonction croissante de la vitesse de rotation d'un arbre de la pompe 1.

Le circuit du système comporte un capteur de débit 201 placé dans un conduit d'alimentation 14 en carburant entre une sortie de la pompe 1 et le moyen de pressurisation 202. Le capteur de débit 201 comprend un tiroir coulissant 211, un moyen de rappel 206 et un capteur 212 de position dudit tiroir.

La position dudit tiroir 211 est pilotée par une différence de pression aux bornes du capteur de débit 201 conformée pour compenser l'effort appliqué par le moyen de rappel 206 sur ledit tiroir 211.

Le circuit est agencé pour que la position dudit tiroir 211 indique un débit de carburant injecté passant par le capteur de débit 201.

Toutes ces caractéristiques sont communes au système selon l'état de la technique et au système conforme aux formes de réalisation de la présente invention.

Pour éviter que la pompe 1 ne délivre un surplus de carburant non souhaité dans le système, lorsque son arbre tourne à une vitesse trop élevée non souhaitée et non en correspondance avec une consigne de carburant à injecter vers le capteur de débit 201, ceci du fait d'un dysfonctionnement de la pompe 1 et de son dispositif d'entraînement 6, le circuit de carburant comprend un dispositif de régulation 3a, 3b d'une section de passage entre la pompe 1 et le capteur de débit 201 et activé par des moyens de pilotage.

Aux figures 3 et 4, la référence 3a illustre un dispositif de commande qui peut être une servovalve et la référence 3b illustre un actionneur qui peut être un deuxième étage de servovalve ou un ensemble tiroir/fourrure. Ceci n'est pas limitatif dans le cadre de la présente invention. L'arbre de la pompe 1 est associé à des moyens de détection relevant une vitesse de rotation de l'arbre. Si ou dès que ces moyens de détection relèvent une vitesse de rotation supérieure à un seuil prédéterminé variable, le dispositif de régulation 3a, 3b est activé pour réduire le débit de carburant injecté envoyé au capteur de débit 201.

Le seuil prédéterminé variable peut être fonction d'un débit de carburant de consigne à envoyer dans le circuit de carburant vers le capteur de débit 201. Ce débit de consigne dépend d'une vitesse de rotation de la turbomachine et des conditions de fonctionnement, par exemple un démarrage, une accélération ou une décélération de la turbomachine.

Le système d'alimentation peut alors comprendre une unité de contrôle, non montrée aux figures, comportant des moyens de détermination d'un débit de consigne à injecter de la pompe 1 vers le capteur de débit 201 et intégrant les moyens de pilotage du dispositif de régulation 3a, 3b.

Le contrôle du dispositif de régulation 3a, 3b peut être réalisé à partir de l'indication de débit donnée par le capteur de position 212 du tiroir du capteur de débit 201. Ce débit de consigne dépend d'une vitesse de rotation de la turbomachine et des conditions de fonctionnement, par exemple un démarrage, une accélération ou une décélération de la turbomachine.

L'unité de contrôle peut comprendre un microprocesseur avec des moyens de mémorisation du seuil prédéterminé variable et être connectée à une unité de contrôle de la turbomachine en pouvant être intégrée dans cette unité de contrôle de la turbomachine.

Les moyens de pilotage du dispositif de régulation 3a, 3b peuvent réguler le débit de carburant vers le capteur de débit 201 pour obtenir un débit injecté dans le capteur de débit 201 fonction du débit de consigne.

Deux formes de réalisation de la présente invention vont être maintenant décrites. Ces formes de réalisation ne sont pas limitatives de la présente invention.

Dans une première forme de réalisation de la présente invention, comme montré à la figure 3, le dispositif de régulation 3a, 3b peut être positionné en dérivation du capteur de débit 201 dans une première dérivation 12 ou conduit en dérivation 12 à la conduite d'alimentation en carburant 14.

Dans cette configuration optionnelle, le dispositif de régulation 3a, 3b peut être, lors de son activation, alimenté par un débit de carburant soustrait au débit injecté envoyé au capteur de débit 201, le carburant du débit soustrait passant par le conduit en dérivation 12.

Le carburant du débit soustrait peut être retourné à la pompe 1 en sortie du dispositif de régulation 3a, 3b par une première boucle de recirculation 4 reliant le dispositif de régulation 3a, 3b à la pompe 1.

Dans une deuxième forme de réalisation de la présente invention, comme montré à la figure 4, le dispositif de régulation 3a, 3b peut être positionné en série avec le capteur de débit 201 dans le conduit d'alimentation 14.

Dans cette configuration optionnelle, le dispositif de régulation 3a, 3b peut créer, lors de son activation, un rétrécissement du passage dans le conduit d'alimentation 14 réduisant le débit de carburant injecté envoyé au capteur de débit 201.

Dans cette deuxième forme de réalisation, la pompe 1 est avantageusement une pompe centrifuge haute pression.

En cas de panne de l'ensemble d'entraînement, l'amenant à une vitesse maximale non souhaitée ou survitesse, la pompe 1 centrifuge fera trop de pression à l'amont du capteur de débit 201, ce qui rendra les lois de commande du débit injecté inopérantes.

La détection de cette panne entraînera la régulation du dispositif de régulation 3a, 3b ou d'un ensemble servovalve à simple étage ou à double étage 3a, 3b associée à un distributeur pour créer une variation du débit vers le capteur de débit 201.

En modulant la perméabilité du circuit à l'aval de la pompe 1 centrifuge et en amont du capteur de débit 201, l'usage de la régulation du circuit de carburant sera ainsi toujours garanti, même lors de ce type de panne.

Il peut exister au moins deux types de pompe 1 pouvant être utilisés dans le cadre de la présente invention, à savoir soit une pompe 1 volumétrique, par exemple une pompe 1 à engrenage, ou soit une pompe 1 centrifuge.

Pour tout type de pompe 1, il est possible d'intercaler une pompe basse pression 7 entre la pompe 1 et le réservoir de carburant 8.

Bien que non montré aux figures, une pompe 1 volumétrique peut être entraînée par un arbre de sortie d'un boîtier d'accessoires de la turbomachine, lui-même entraîné par un axe du corps primaire de la turbomachine.

Un dispositif d'entraînement peut être généralement installé entre l'arbre du boîtier de relais d'accessoires et la pompe 1 pour adapter les régimes de rotation entre ces deux équipements et déterminer le rapport K précédemment mentionné en regard de la figure 1 entre la vitesse de la pompe 1 et la vitesse de rotation œ de l'axe moteur de la turbomachine.

Il peut être utilisé dans le dispositif d'entraînement un réducteur à train épicycloïdal comportant un planétaire central tournant autour de l'axe du train, des satellites engrenant avec le planétaire central et portés par un porte-satellites, le porte-satellites étant agencé pour pouvoir tourner autour de l'axe du train.

Le train épicycloïdal peut comprendre aussi une couronne externe avec laquelle les satellites s'engrènent également, la couronne étant agencée pour pouvoir tourner autour de l'axe du train.

Le dispositif de régulation 3a, 3b peut être une servovalve à simple étage, à double étage ou associée à un distributeur en étant à simple étage. La position de la servovalve dans le circuit peut être différente selon que la pompe est volumétrique ou centrifuge.

Dans le cas où les moyens de détection relèvent une vitesse de rotation inférieure au seuil prédéterminé, ce qui correspond à un entraînement de la pompe 1 sans dysfonctionnement, le dispositif de régulation 3a, 3b n'est pas activé.

Dans ce cas, le débit soustrait, conformément à la première forme de réalisation, est nul ou une réduction de débit envoyé au capteur de débit 201, conformément à la deuxième forme de réalisation, est nulle.

Pour les deux formes de réalisation de la présente invention, le circuit de carburant peut comporter une boucle de commande 13, 5 destinée à actionner des géométries variables 10 de la turbomachine. La boucle de commande 13, 5 peut démarrer par un piquage d'une deuxième dérivation 13 placée en amont du dispositif de régulation 3a, 3b sur le conduit d'alimentation 14 en sortie de la pompe 1. Une deuxième boucle de recirculation 5 de carburant peut alors retourner vers la pompe 1 à partir des géométries variables 10.

En analogie avec un système selon l'état de la technique, dans le cadre de la présente invention, un clapet de recirculation 203 peut être placé en dérivation entre le capteur de débit 201 et le moyen de pressurisation 202, en étant connecté à une troisième boucle de recirculation 4a.

Les première, deuxième et troisième boucles de recirculation 4, 5, 4a peuvent se rejoindre en entrée de la pompe 1.

Il est à garder à l'esprit que d'autres formes de retour à la pompe 1 peuvent être mises en oeuvre et que ce qui est montré aux figures est purement illustratif et non limitatif. Des boucles peuvent par exemple être communalisées ou renvoyées vers des positions autres dans le circuit de carburant. Un dispositif de régulation auxiliaire 204, sous forme par exemple d'une servovalve et différent du dispositif de régulation précédemment cité, peut commander essentiellement le moyen de pressurisation 202 et le clapet de recirculation 203. Bien que cela ne soit pas limitatif, une quatrième boucle de recircuiation 11 peut aussi être présente partant du dispositif de régulation auxiliaire 204 et débouchant dans la pompe 1 en rejoignant les première, deuxième et troisième boucles de recirculation 4, 5, 4a en amont de la pompe 1.

Le moyen de pressurisation 202 permet d'assurer la pression minimale pour le bon fonctionnement des géométries variables 10, ainsi que la coupure du débit injecté.

Le clapet de recirculation 203 permet d'assurer l'échappement du débit délivré par la pompe 1 afin de ne pas monter en pression dans le circuit, lors de l'activation de cette coupure par le dispositif de régulation auxiliaire 204.

Cependant cette recirculation n'existe que lors de la phase d'arrêt ou lors de la préparation à l'allumage, le temps de la diminution de la vitesse de rotation de la pompe 1.

L'invention concerne aussi une turbomachine comportant un tel système d'alimentation.

L'invention concerne enfin un procédé de régulation d'un débit injecté de carburant à partir d'une pompe 1 à carburant vers un capteur de débit 201 placé dans un conduit d'alimentation 14 en carburant d'un système d'alimentation en carburant d'une telle turbomachine dans un aéronef, puis en sortie 3 du système vers la turbomachine.

Le procédé met en oeuvre des lois de pilotage de la vitesse de rotation de l'arbre de la pompe 1, qui augmentent ou, respectivement, diminuent cette vitesse lorsque le débit indiqué par le capteur diminue ou augmente, de manière à ce que le débit et la pression en sortie du circuit suivent des valeurs de consigne adaptées aux conditions de vol de l'aéronef. Ces lois de pilotage peuvent être implémentées dans l'unité de contrôle du système d'alimentation. Selon l'invention, quand il est détecté une vitesse de rotation de l'arbre de la pompe 1 significative d'un dysfonctionnement d'un entraînement de l'arbre en étant trop élevée en regard des valeurs de consigne en vigueur délivrées conformément aux lois de pilotage par l'unité de contrôle du système, il est procédé à une réduction du débit de carburant injecté envoyé de la pompe 1 au capteur de débit 201.

Cette réduction de débit peut se faire par soustraction d'un débit à travers le dispositif de régulation 3a, 3b ou par rétrécissement du passage dans le conduit d'alimentation 14 sous action du dispositif de régulation 3a, 3b pouvant alors être intégré en tant que servovalve dans le conduit d'alimentation 14.

L'invention n'est nullement limitée aux modes de réalisation décrits et illustrés qui n'ont été donnés qu'à titre d'exemples.

## Revendications

1. Système d'alimentation en carburant d'une turbomachine, comprenant un circuit de carburant comportant un moyen de pressurisation (202) en sortie (3) dudit circuit, une pompe (1) agencée pour envoyer dans ledit circuit un débit de carburant qui est une fonction croissante de la vitesse de rotation d'un arbre de la pompe (1), le circuit comportant un capteur de débit (201) placé dans un conduit d'alimentation (14) en carburant entre une sortie de la pompe (1) et le moyen de pressurisation (202), le capteur de débit (201) comprenant un tiroir coulissant (211), un moyen de rappel (206) et un capteur (212) de position dudit tiroir (211), la position dudit tiroir (211) étant pilotée par une différence de pression aux bornes du capteur de débit (201) conformée pour compenser l'effort appliqué par le moyen de rappel (206) sur ledit tiroir (211), le circuit étant agencé pour que la position dudit tiroir (211) indique un débit de carburant injecté passant par le capteur de débit (201), **caractérisé en ce que** le circuit de carburant comprend un dispositif de régulation (3a, 3b) d'une section de passage entre la pompe (1) et le capteur de débit (201), et activée par des moyens de pilotage, l'arbre de la pompe (1) étant associé à des moyens de détection relevant une vitesse de rotation de l'arbre et, le dispositif de régulation (3a, 3b) est configuré pour être activé pour réduire et doser le débit de carburant injecté envoyé au capteur de débit (201) si lesdits moyens de détection relèvent une vitesse de rotation supérieure à un seuil prédéterminé variable.

2. Système d'alimentation selon la revendication précédente, lequel comprend une unité de contrôle déterminant un débit de consigne à injecter de la pompe (1) vers le capteur de débit (201) et intégrant les moyens de pilotage du dispositif de régulation (3a, 3b), le seuil prédéterminé variable étant fonction du débit de consigne, les moyens de pilotage du dispositif de régulation (3a, 3b) régulant le débit de carburant vers le capteur de débit (201) pour obtenir un débit injecté dans le capteur de débit (201) en fonction du débit de consigne.

3. Système d'alimentation selon la revendication 1 ou 2, dans lequel le dispositif de régulation (3a, 3b) est positionné en dérivation du capteur de débit (201) dans une première dérivation (12) à la conduite d'alimentation (14) en carburant, le dispositif de régulation (3a, 3b) étant, lors de son activation, alimenté par un débit de carburant soustrait au débit injecté envoyé au capteur de débit (201).

4. Système d'alimentation selon la revendication précédente, dans lequel le carburant du débit soustrait est retourné à la pompe (1) par une première boucle de recirculation (4) reliant le dispositif de régulation (3a, 3b) à la pompe (1).

5. Système d'alimentation selon la revendication 1 ou 2, dans lequel le dispositif de régulation (3a, 3b) est positionné en série avec le capteur de débit (201) dans le conduit d'alimentation (14), le dispositif de régulation (3a, 3b) créant, lors de son activation, un rétrécissement du passage dans le conduit d'alimentation (14) réduisant le débit de carburant injecté envoyé au capteur de débit, la pompe (1) étant une pompe centrifuge haute pression.

6. Système d'alimentation selon l'une quelconque des revendications précédentes, dans lequel le circuit de carburant comporte une boucle de commande (13, 5) destinée à actionner des géométries variables (10) de la turbomachine, ladite boucle de commande (13, 5) démarrant par un piquage d'une deuxième dérivation (13) placée en amont de la première dérivation (12) ou du dispositif de régulation (3a, 3b) sur le conduit d'alimentation (14) en sortie de la pompe (1), une deuxième boucle de recirculation (5) de carburant retournant vers la pompe (1)à partir des géométries variables (10).

7. Système selon l'une quelconque des revendications précédentes, dans lequel le dispositif de régulation (3a, 3b) est une servovalve à simple étage, à double étage ou associée à un distributeur.

8. Système selon l'une quelconque des revendications précédentes, dans lequel, si les moyens de détection relèvent une vitesse de rotation inférieure au seuil prédéterminé, le dispositif de régulation (3a, 3b) n'est pas activé et le débit soustrait est nul ou une réduction de débit envoyé au capteur de débit (201) est nulle.

9. Système d'alimentation selon la revendication précédente, dans lequel un clapet de recirculation (203) est placé en dérivation entre le capteur de débit (201) et le moyen de pressurisation (202), en étant connecté à une troisième boucle de recirculation (4a), un dispositif de régulation auxiliaire (204) commandant essentiellement le moyen de pressurisation (202) et le clapet de recirculation (203), les première, deuxième et troisième boucles de recirculation (4, 5, 4a) se rejoignant en entrée de la pompe (1).

10. Turbomachine comportant un système d'alimentation selon l'une quelconque des revendications précédentes.

11. Procédé de régulation d'un débit injecté de carburant à partir d'une pompe (1) à carburant vers un capteur de débit (201) placé dans un conduit d'alimentation (14) en carburant d'un système d'alimentation en carburant d'une turbomachine selon la revendication précédente dans un aéronef, le procédé mettant en oeuvre des lois de pilotage de la vitesse de rotation de l'arbre de la pompe (1), qui augmentent ou, respectivement, diminuent cette vitesse lorsque le débit indiqué par le capteur de débit (201) diminue ou augmente, de manière à ce que le débit et la pression en sortie du circuit suivent des valeurs de consigne adaptées aux conditions de vol de l'aéronef, **caractérisé en ce que**, quand il est détecté une vitesse de rotation de l'arbre de la pompe (1) significative d'un dysfonctionnement d'un entraînement de l'arbre en étant trop élevée en regard des valeurs seuils prédéterminées variables de consigne, il est procédé à une réduction du débit de carburant injecté envoyé de la pompe (1) au capteur de débit (201) au moyen du dispositif de régulation (3a,3b).

## Patentansprüche

1. System zur Kraftstoffversorgung eines Turbotriebwerks, umfassend einen Kraftstoffkreislauf, der ein Druckbeaufschlagungsmittel (202) am Ausgang (3) des Kreislaufs aufweist, eine Pumpe (1), die eingerichtet ist, um in den Kreislauf einen Kraftstoffdurchfluss zu fördern, der eine zunehmende Funktion der Drehgeschwindigkeit einer Welle der Pumpe (1) ist, wobei der Kreislauf einen Durchflusssensor (201) umfasst, der in einer Kraftstoffversorgungsleitung (14) zwischen einem Ausgang der Pumpe (1) und dem Druckbeaufschlagungsmittel (202) angeordnet ist, wobei der Durchflusssensor (201) einen verschiebbaren Schieber (211), ein Rückstellmittel (206) und einen Sensor (212) für die Position des Schiebers (211) umfasst, wobei die Position des Schiebers (211) durch eine Druckdifferenz an den Klemmen des Durchflusssensors (201) gesteuert wird, die so gestaltet ist, dass sie die von dem Rückstellmittel (206) auf den Schieber (211) ausgeübte Kraft kompensiert, wobei der Kreislauf so eingerichtet ist, dass die Position des Schiebers (211) einen Durchfluss an eingespritztem Kraftstoff anzeigt, der den Durchflusssensor (201) passiert, **dadurch gekennzeichnet, dass** der Kraftstoffkreislauf eine Vorrichtung (3a, 3b) zur Regulierung eines Durchgangsquerschnitts zwischen der Pumpe (1) und dem Durchflusssensor (201) umfasst und durch Steuerungsmittel aktiviert wird, wobei die Welle der Pumpe (1) Erfassungsmitteln zugeordnet ist, die eine Drehgeschwindigkeit der Welle erfassen, und die Regulierungsvorrichtung (3a, 3b) konfiguriert ist, um aktiviert zu werden, um den an den Durchflusssensor (201) geförderten eingespritzten Kraftstoffdurchfluss zu reduzieren und zu dosieren, wenn die Erfassungsmittel eine Drehgeschwindigkeit erfassen, die größer als eine vorbestimmte variable Schwelle ist.

2. Versorgungssystem nach dem vorstehenden Anspruch, wobei das Versorgungssystem eine Steuereinheit umfasst, die einen von der Pumpe (1) zum Durchflusssensor (201) einzuspritzenden Solldurchfluss bestimmt und die Steuerungsmittel der Regulierungsvorrichtung (3a, 3b) integriert, wobei die vorbestimmte variable Schwelle eine Funktion des Solldurchflusses ist, wobei die Steuermittel der Regulierungsvorrichtung (3a, 3b) den Kraftstoffdurchfluss zum Durchflusssensor (201) regulieren, um einen in den Durchflusssensor (201) eingespritzten Durchfluss in Abhängigkeit vom Solldurchfluss zu erhalten.

3. Versorgungssystem nach Anspruch 1 oder 2, wobei die Regulierungsvorrichtung (3a, 3b) in Umleitung vom Durchflusssensor (201) in einer ersten Umleitung (12) zur Kraftstoffversorgungsleitung (14) positioniert ist, wobei die Regulierungsvorrichtung (3a, 3b) bei ihrer Aktivierung mit einem Kraftstoffdurchfluss versorgt wird, der von dem zum Durchflusssensor (201) geförderten Einspritzdurchfluss subtrahiert wird.

4. Versorgungssystem nach dem vorstehenden Anspruch, wobei der Kraftstoff des abgezogenen Durchflusses über eine erste Rückführschleife (4), welche die Regulierungsvorrichtung (3a, 3b) mit der Pumpe (1) verbindet, zu der Pumpe (1) zurückgeführt wird.

5. Versorgungssystem nach Anspruch 1 oder 2, wobei die Regulierungsvorrichtung (3a, 3b) in Reihe mit dem Durchflusssensor (201) in der Versorgungsleitung (14) positioniert ist, wobei die Regulierungsvorrichtung (3a, 3b) bei ihrer Aktivierung eine Verengung des Durchgangs in der Versorgungsleitung (14) erzeugt, die den zum Durchflusssensor geförderten eingespritzten Kraftstoffdurchfluss reduziert, wobei die Pumpe (1) eine Hochdruckzentrifugalpumpe ist.

6. Versorgungssystem nach einem der vorstehenden Ansprüche, wobei der Kraftstoffkreislauf eine Steuerschleife (13, 5) zum Betätigen von variablen Geometrien (10) des Turbotriebwerks aufweist, wobei die Steuerschleife (13, 5) durch eine Abzweigung einer zweiten Umleitung (13), die stromaufwärts der ersten Umleitung (12) oder der Regulierungsvorrichtung (3a, 3b) an der Versorgungsleitung (14) am Ausgang der Pumpe (1) angeordnet ist, eine zweite Kraftstoffrückführschleife (5) startet, die ausgehend von den variablen Geometrien (10) zur Pumpe (1) zurückgeführt wird.

7. System nach einem der vorstehenden Ansprüche, wobei die Regulierungsvorrichtung (3a, 3b) ein einstufiges, zweistufiges oder einem Verteiler zugeordnetes Servoventil ist.

8. System nach einem der vorstehenden Ansprüche, wobei, wenn die Erfassungsmittel eine Drehgeschwindigkeit unterhalb einer vorbestimmten Schwelle erfassen, die Regulierungsvorrichtung (3a, 3b) nicht aktiviert wird und der subtrahierte Durchfluss null ist oder eine Reduktion des an den Durchflusssensor (201) geförderten Durchflusses null ist.

9. Versorgungssystem nach dem vorstehenden Anspruch, wobei ein Rückführventil (203) in Umleitung zwischen dem Durchflusssensor (201) und dem Druckbeaufschlagungsmittel (202) angeordnet ist, indem es mit einer dritten Rückführschleife (4a) verbunden ist, wobei eine Hilfsregulierungsvorrichtung (204) im Wesentlichen das Druckbeaufschlagungsmittel (202) und das Rückführventil (203) steuert, wobei sich die erste, zweite und dritte Rückführschleife (4, 5, 4a) am Eingang der Pumpe (1) vereinigen.

10. Turbotriebwerk, das ein Versorgungssystem nach einem der vorstehenden Ansprüche aufweist.

11. Verfahren zur Regulierung eines von einer Kraftstoffpumpe (1) eingespritzten Kraftstoffdurchflusses zu einem Durchflusssensor (201), der in einer Kraftstoffversorgungsleitung (14) eines Kraftstoffversorgungssystems eines Turbotriebwerks nach dem vorstehenden Anspruch in einem Luftfahrzeug angeordnet ist, wobei das Verfahren Gesetze zur Steuerung der Drehgeschwindigkeit der Welle der Pumpe (1) implementiert, die diese Geschwindigkeit erhöhen bzw. verringern, wenn der von dem Durchflusssensor (201) angezeigte Durchfluss abnimmt bzw. zunimmt, so dass der Durchfluss und der Druck am Ausgang des Kreislaufs Sollwerten folgen, die an die Flugbedingungen des Luftfahrzeugs angepasst sind, **dadurch gekennzeichnet, dass**, wenn eine Drehgeschwindigkeit der Welle der Pumpe (1) erfasst wird, die für eine Fehlfunktion eines Antriebs der Welle signifikant ist, indem sie zu hoch im Hinblick auf die vorbestimmten variablen Sollwertschwellen ist, eine Reduktion des von der Durchflusssensorpumpe (201) geförderten eingespritzten Kraftstoffs mittels der Regulierungsvorrichtung (3a, 3b) vorgenommen wird.

## Claims

1. A fuel supply system of a turbomachine, comprising a fuel circuit comprising pressurizing means (202) at the outlet (3) of said circuit, a pump (1) arranged to send a flow of fuel into said circuit which is an increasing function of the speed of rotation of a shaft of the pump (1), the circuit comprising a flow sensor (201) placed in a fuel supply duct (14) between an outlet of the pump (1) and the pressurizing means (202), the flow sensor (201) comprising a sliding drawer (211), a return means (206) and a sensor (212) for the position of said drawer (211), the position of said drawer (211) being controlled by a pressure difference across the terminals of the flow sensor (201) shaped to compensate for the force applied by the return means (206) on said drawer (211), the circuit being arranged so that the position of said drawer (211) indicates an injected fuel flow passing through the flow sensor (201), **characterised in that** the fuel circuit comprises a device (3a, 3b) for regulating a passage cross section between the pump (1) and the flow sensor (201), and activated by control means, the shaft of the pump (1) being associated with detection means recording a speed of rotation of the shaft and, the regulating device (3a, 3b) is configured to be activated to reduce and meter the injected fuel flow sent to the flow sensor (201) if said detection means record a speed of rotation above a variable predetermined threshold.

2. The supply system according to the preceding claim, which comprises a monitoring unit determining a setpoint flow to be injected from the pump (1) to the flow sensor (201) and integrating the means for controlling the regulating device (3a, 3b), the variable predetermined threshold being a function of the setpoint flow, the means for controlling the regulating device (3a, 3b) regulating the flow of fuel to the flow sensor (201) to obtain a flow injected into the flow sensor (201) according to the setpoint flow.

3. The supply system according to claim 1 or 2, wherein the regulating device (3a, 3b) is positioned in a bypass of the flow sensor (201) in a first bypass (12) to the fuel supply duct (14), the regulating device (3a, 3b) being, when activated, supplied with a fuel flow subtracted from the injected flow sent to the flow sensor (201).

4. The supply system according to the preceding claim, wherein the fuel of the subtracted flow is returned to the pump (1) by a first recirculation loop (4) connecting the regulating device (3a, 3b) to the pump (1).

5. The supply system according to claim 1 or 2, wherein the regulating device (3a, 3b) is positioned in series with the flow sensor (201) in the supply duct (14), the regulating device (3a, 3b) creating, upon activation, a narrowing of the passage in the fuel supply duct (14) reducing the injected fuel flow sent to the flow sensor, the pump (1) being a high pressure centrifugal pump.

6. The supply system according to any one of the preceding claims, wherein the fuel circuit comprises a control loop (13, 5) intended to operate variable geometries (10) of the turbomachine, said control loop (13, 5) starting by tapping a second bypass (13) placed upstream of the first bypass (12) or of the regulating device (3a, 3b) on the supply duct (14) at the outlet of the pump (1), a second recirculation loop (5) of fuel returning to the pump (1) from the variable geometries (10).

7. The system according to any one of the preceding claims, wherein the regulating device (3a, 3b) is a single stage servo valve, a double stage servo valve or associated with a directional valve.

8. The system according to any one of the preceding claims, wherein, if the detection means record a speed of rotation below the predetermined threshold, the regulating device (3a, 3b) is not activated and the subtracted flow is zero or a flow reduction sent to the flow sensor (201) is zero.

9. The supply system according to the preceding claim, wherein a recirculation valve (203) is placed in bypass between the flow sensor (201) and the pressurizing means (202), being connected to a third recirculation loop (4a), an auxiliary regulating device (204) essentially controlling the pressurizing means (202) and the recirculation valve (203), the first, second and third recirculation loops (4, 5, 4a) joining at the inlet of the pump (1).

10. A turbomachine comprising a supply system according to any one of the preceding claims.

11. A method of regulating an injected flow of fuel from a fuel pump (1) to a flow sensor (201) placed in a fuel supply duct (14) of a fuel supply system of a turbomachine according to the preceding claim in an aircraft, the method implementing laws for controlling the speed of rotation of the shaft of the pump (1), which increase or, respectively, decrease this speed when the flow indicated by the flow sensor (201) decreases or increases, so that the flow and the pressure at the outlet of the circuit follow setpoint values adapted to the flight conditions of the aircraft, **characterised in that**, when a speed of rotation of the shaft of the pump (1) is detected as being significant of a malfunction of a drive of the shaft and being too high with respect to the predetermined variable setpoint threshold values, a reduction in the injected fuel flow sent from the pump (1) to the flow sensor (201) by means of the regulating device (3a, 3b).
